**Europäisches Patentamt**

**European Patent Office**

**Office européen des brevets**

(11) Publication number : **0 468 887 B1**

# EUROPEAN PATENT SPECIFICATION

(45) Date of publication of patent specification :
27.09.95 Bulletin 95/39

(51) Int. Cl.[6] : **H01Q 17/00**

(21) Application number : **91402059.9**

(22) Date of filing : **24.07.91**

(54) **High frequency broadband absorption structures.**

(30) Priority : **27.07.90 FR 9009600**

(43) Date of publication of application :
**29.01.92 Bulletin 92/05**

(45) Publication of the grant of the patent :
**27.09.95 Bulletin 95/39**

(84) Designated Contracting States :
**DE GB IT**

(56) References cited :
DE-B- 1 014 616
FR-A- 2 410 343
FR-A- 2 592 265
GB-A- 1 064 130
GB-A- 1 152 431
US-A- 3 938 152

(73) Proprietor : **Mayer, Ferdy**
**7 rue Paul-Barruel**
**F-75015 Paris (FR)**

(72) Inventor : **Mayer, Ferdy**
**7 rue Paul-Barruel**
**F-75015 Paris (FR)**

(74) Representative : **Pinguet, André**
**Cabinet de Propriété Industrielle**
**CAPRI,**
**94, avenue Mozart**
**F-75016 Paris (FR)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

## SUMMARY

Simulation of frequency selected dispersions of permeability spectra and permittivity spectra of compact ferrites, by the use of ferro/ferri magnetic granular material, in a dielectric binder material, and implementation of high frequency "quarter-wave" absorbers, where a layer of the composite material is placed close to a conductive surface. Specific use for antiradar applications and RCS reduction of objects like cables, anechoic rooms and TEM cell loading.

## HIGH FREQUENCY BROADBAND ABSORPTIVES STRUCTURES

Dielectric lossy materials as described by the complex permittivity :

$$\varepsilon * = \varepsilon' - j\varepsilon''$$

where $\varepsilon'$ and $\varepsilon''$ represent respectively the real permittivity and imaginary (= loss) permittivity.

Magnetic lossy materials are described by their complex permeability :

$$\mu * = \mu' - j\mu''$$

where $\mu'$ and $\mu''$ represent respectively the real permeability and imaginary (loss) permeability.

Both can vary with frequency, i.e. their "spectra" are to be considered ; both can be superposed in the same material, describing so a "dielectro-magnetic" lossy material.

The wave impedance of such a material is :

$$Z_m - \sqrt{\mu * / \varepsilon *}$$

and the corresponding electromagnetic wave propagation constant

$$\gamma_m = j \frac{2\pi}{\lambda} \sqrt{\varepsilon * \mu *}$$

where $\lambda$ is the free-space wavelength of the wave.

An em wave incident upon such a material, will experience a reflection at the surface :

$$R_m = \frac{\sqrt{\mu * / \varepsilon *} - \sqrt{\mu_o / \varepsilon_o}}{\sqrt{\mu * / \varepsilon *} + \sqrt{\mu_o / \varepsilon_o}}$$

where $\varepsilon_o$ is the permittivity the of free-space = $\frac{1}{36 \pi \cdot 10^9}$ and $\mu_o$ the permeability of free-space = $4\pi \cdot 10^{-7}$

Obviously, such reflexion cancels when $\sqrt{\mu * / \varepsilon *} = \sqrt{\mu_o / \varepsilon_o}$ i.e. when material and free-space impedances match.

Another way to cancel reflexion, is to accept above "front-reflexion", but to cancel it by an out of phase reflexion from the back-side of the material. For the typical case, where a layer of material (of thickness d) is backed by a good conductive surface, the reflection R, for vertical incidence, is

$$R = \frac{R_m - e^{j\gamma_m d}}{1 - R_m \cdot e^{-j\gamma_m d}}$$

where appears the first "one quarter-wavelength" absorber and further odd quarter-wavelength cases (corresponding for a given thickness d of the absorber, to several "cancelling frequencies").

A third way to cancel reflexion, is to consider important variations of $\mu *$ and $\varepsilon *$ spectra, where the propagation constant $\gamma_m$ varies faster than the wavelength in the material, i.e. one can find the R = 0 condition at higher frequencies.

All three basic cases are considered in this invention, and especially their optimal combinations, so as to achieve a very broadband absorber.

It is also known, by U.S. Patent 3,938,152 a sintered ferrite obtained by mixing several different ferrites with a binder, which is removed before a sintering operation.

The properties of the compact product so obtained are limited due to the compactness of the product.

It is also known by German Patent 1 014 616, a single adaptation layer with a high refraction index for the reflexion free transition of an electromagnetic ray, from a medium like air in another medium.

In such a layer, all ferrites are excluded, as this patent discloses only ferromagnetic powders.

In the state of the art, low loss ferrite composite materials have been used to achieve "quarter-wavelength" absorbers ("Eltro UK Patent n° 1.152.431) for microwave frequencies ( $\lambda$ = 3 to 10 cm) and bulk ferrites have been used to implement such absorbers (Grimes US Patent N°3958.152) for lower frequencies in the 200 MHz to 2,5 GHz frequency range.

A first aim of the invention is to describe a conductive backed absorber, covering the very wide frequency range of 30 MHz - 1 GHz and higher with reduced electromagnetic reflectivity : indeed, such frequency range corresponds to the range of mandatory performance for ALC testing. In such an application, the related site attenuation (or SAD, site attenuation deviation), takes in account, additionaly, the reflectivity variation, with the incidence angle of the wave.

Such very wide frequency range performance and controlled bistatic performance cannot be achieved with the described ferrites / ferrite compounds..

A second aim is to describe several unexpected interesting materials / combinations thereof, allowing to achieve the above results. The implementation of new electromagnetic composites, using low frequency ferrites in very high volume concentration ($C_v$), so as to simulate non existing bulk ferrites, with convenient $\mu *$ and $\varepsilon *$ spectra, represent an important aim of the invention.

Combining bulk ferrites, with ferrite/iron composites, of high and/or low $C_v$ is another solution.

In such "artificial ferrites", the desired $\mu *$ and $\varepsilon *$

spectra, and their dispersions, necessary for broadband performance, can be implemented and frequency optimized.

More particularly, values of $\mu'$ and $\mu''$, which are higher than those for the compact ferrite can be achieved, in the frequency range.

A third aim, is to describe a related surprising effect that the simulation of such "artificial ferrites" can be made at the macroscopic level, i.e. where an equivalent to the high volume concentrations is achieved by equivalent "gaps" between bulk ferrite tiles, achieving thus the simulation of the desired permeability spectra.

A fourth aim, is related to the presence of non (or low) magnetic intersticial material, inside the composite, (on the microscopic level), or outside the ferrite (on a macroscopic level) : Thus the overall effective permittivity can be controlled, and a useful permittivity dispersion introduced, for broadband operation.

Obviously, such non magnetic intersticial binder material can be thermoplastic or thermosettable, allowing the implementation by a low temperature process, rather than high temperature sintering, with the advantages of easy shaping, dimensioning and global application.

Obviously too, several kinds of magnetica can be introduced in such composites, to achieve a combination of the desired dispersions, and eventually the superposition of several "matching" effects as described earlier.

A fifth aim, is to optimize the broad low reflectivity range, by the superposition of several layers of different dielectromagnetica, each optimized for a given frequency band, within the overall frequency range. Such layers can use different "artificial ferrites"(various $C_{v's}$, various magnetica), and/or different effective airgaps, between tiles, in different layers, simulating the corresponding dispersion spectra.

The solution to the general aims cited above, with their inexpected results, is presented by :

  - a composite dielectromagnetic electromagnetic wave absorber material adapted to reduce electromagnetic wave reflectivity over the 30 MHz to 1 GHz and higher frequency range in which at least one ferro- or ferrimagnetic granular material is surrounded by an essentially non-magnetic matrix binding material, said granular material having an effective volume concentration of 10 to 99,9 %, said absorber showing an imaginary permeability varying as the reciprocal of the frequency over said frequency range, said absorber material being characterized by the combination of:

  . selected magnetic characteristics of said dielectromagnetic materials so that the area of magnetic dispersion, i.e. the frequency area where the real permeability decreases with increasing frequency and the loss permeability is high or a maximum, is within the considered frequency range, by the choice of volume concentration within the material and/or by external airgaps, i.e. the implementation of microscopic, essentially non-magnetic interstices and/or macroscopic essentially non-magnetic gaps; and

  . selected dielectric characteristics of said dielectromagnetic materials, combined with those of the intersticial gaps and/or dielectric binding material, so as to achieve an

    overall high dielectric permittivity $\varepsilon$, with optionally a certain permittivity dispersion, i.e. a frequency area where the complex permittivity shows a significant dielectric loss and a decrease with increasing frequency, within the considered frequency range.

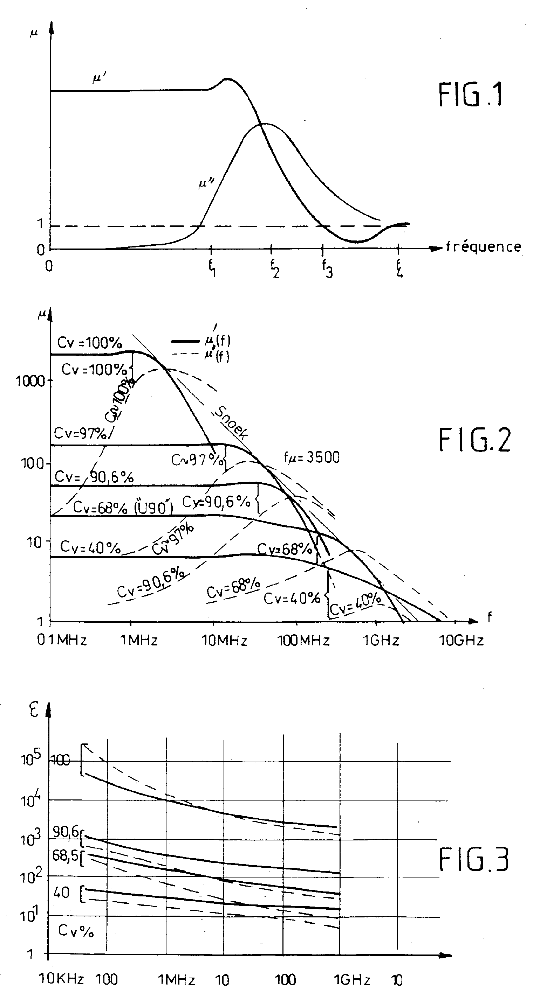

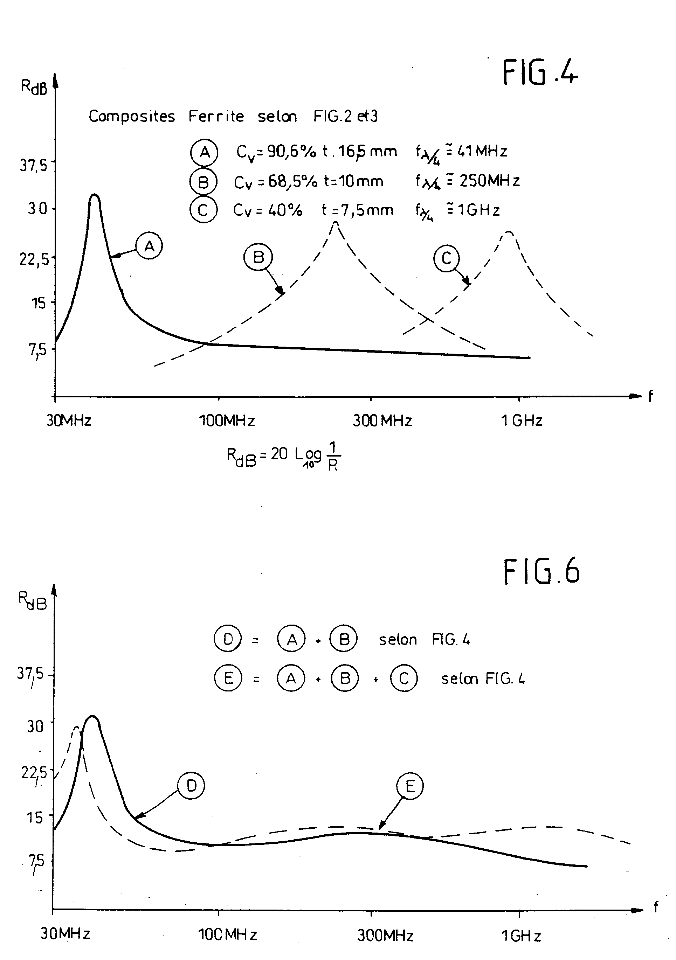

The invention is shown clearly, in light of several basic rules, related to the kind of high concentration magnetic composite materials used. Figure 1 shows a typical permeability spectrum. Between O and $f_1$, the real part $\mu'$ is constant, and losses $\mu''$ are small : this is the area of normal use of a ferrimagnetic or ferromagnetic material. Region $f_1$ to $f_4$ corresponds to the dispersion area, where $\mu'$ decreases, and losses $\mu''$ are maximum : this area is used in this invention. Figure 2 shows numerical values for a typical high $\mu'$ Mn-Zn ferrite, with excess iron content (type N27 Siemens, 3C8 Philips, B50 LCC ; with a low frequency $\mu'$ of about 2300). The bulk ferrite corresponds to $C_v$ = 100 %, and such a ferrite obviously is not fit for the 30 MHz - 1 GHz frequency range, at it misses essentially the dispersion area.

Other (bulk) ferrites have so to be used with reduced saturation magnetization, as for example Ni-Zn or Mg-Zn ferrites, having their $\mu'$ dispersion and $\mu''$ loss centered in the 30 MHz - 1 GHz range (Ref. "Ferrites"--).Smit and M.P.J. - Wijn, Philips Technical Library 1959, p. 269) (Type Ferrites:Philips 2510 and 4510, and TDK IBIII).

I have observed that the dispersion spectra can be modeled, by modifying the magnetic concentration, achieving Cv between 40 and 99,5 % ; for example, fig. 2 shows that the dispersion area can be centered within the desired frequency range, for Cv = 90,6 to 97 %. Such concentrations, of course, are much higher than those described and used in classical absorptive composites : but one can thus achieve, with a composite, an equivalency of the bulk Ni-Zn etc. ferrites mentioned. In the same way, with $C_v$ = 40 %, one can simulate a Ni-Zn-Co bulk ferrite, or a Baryum substituted ferrite , in the range of 1 GHz to 10 GHz and higher.

Fig. 2 shows too the surprising effect, of the achievement of $\mu'$ values with composites, over a certain frequency range, which are higher than those of the bulk ferrite. I have observed further, that such ferrites (or iron) composites, follow Snoek's law, telling that the product:frequency·real permeability represents a

limit, i.e. :

$$(\mu' - I)\cdot f = \frac{I}{3\pi} \Gamma \, Ms$$

= constant, for a given ferro-ferri magnetic bulk ferrite or composite, as shown by the straigth line in Fig 2.

In this equation, $\Gamma$ is the gyromagnetic factor, Ms the saturation magnetization, and f the frequency. For the ferrite of Fig. 1, the product $(\mu'- I).f$ (in MHz) is approximatively equal to 3500.

I have observed finally, the surprising effect of simulating such new dispersion frequency ranges, when using a magnetic bulk material, where this material is not finally divided as above (with high $C_v$ , in a composite ), but where the division is macroscopic, i.e. where the bulk material sheet arc separated by non-magnetic (or low magnetic) gaps, like for example ferrite tiles separated by air-spaces, in a geometry,where tile size and air gaps are small compared to the wavelength : the wave than sees only "average" values of $\varepsilon*$ and $\mu*$, which are identical to curves of figures 2 and 3, considering airgaps instead of concentrations $C_v$. These surprising effects are of significance in practical absorber surface design, and may explain the here-to unexplained behaviour of performance of tile covered surfaces, where small airgaps between tiles are unavoidable.

Obviously, the presence of a non-magnetic (or low magnetic) binder in such composite materials, allows the control of permittivity, including a dispersion of permittivity, inside the useful frequency range. Fig. 3 shows $\varepsilon'$ and $\varepsilon''$ values for the same composites, with Mn-Zn ferrite of Fig. 2.

I have found that high values of $\varepsilon'$, with such a dispersion, are very favourable, to broaden the effective frequency range, where reflectivity R is small, with a limit nevertheless : as the magnetic loss angle $\mu''/\mu'$ can become greater than 1 (see Fig. 2), the maximum usable dielectric loss angle $\varepsilon''/\varepsilon'$, will have to be smaller than 1, so as to keep the physical basis for resonance effects, upon which the quarter-wavelength absorber is built.

Such high values of $\varepsilon'$ have been achieved with the use of high permittivity, good insulating matrix material, where the ferrite grains of the composite are more or less conductive (including carbonyl iron), or with higher resistivity ferrites, with a more or a less conductive matrix material.

Obviously, the very principle of composite structure, allows the integration of other dielectric relaxation effects (causing the dispersion), of dipolar resonance effects (causing additional dispersion), of dipolar resonances (causing additional absorption), chiral effects (causing additional dispersion and absorption, i.e. the spectra of permittivity, can be controlled as opposed to the built-in permittivity of a bulk ferrite.

For simplicity's sake, I shall describe now several examples, limiting myself to the case where the absorptive dielectro-magnetic material is backed by a conductive surface. Obviously, the same considerations apply, for any other substrates, with the corresponding change of optimum geometry, with for example, the approximative $\lambda/2$ design, where the substrate shows much higher wave impedance. The examples are bases upon the use of the ferrite and composites of Fig. 2 and 3, when not stated otherwise.

## . **Example 1**

One-layer absorber, for the 30-1000 MHz) frequency range

The analysis of the reflectivity equation, mentioned earlier, shows that a "quarter-wavelength", has to be sougth for, on the lower side of the range, i.e. towards 40 MHz.

The composite has to show a maximum value of $\mu''$ and the beginning of the dispersion for that frequency : Fig. 2 shows that volume concentrations of the ferrite of $C_v$ between 90,6 and 97 % are convenient.

A straight forward calculation with $C_v$ = 90,6 %, and a thickness of 16,5 mm gives the reflectivity values, of curve A, Fig. 4

$$(\text{reflectivity} = 20 \, \underset{10}{Log} \, \frac{1}{R}).$$

For 41 MHz, there is a maximum of performance, of some 30 to 40 dB ; the reflectivity is better than 6 dB from 30 MHz to 1 GHz.

In an identical fashion, looking for a quarter-wavelength resonance towards 250 MHz, Fig. 2 suggests a concentration $C_v$ between 60 and 75 %. The calculation, for $C_v$ = 68 % for example, shows curve B, Fig. 4, for a thickness of 10 mm for this absorber : for 245 MHz, a maximum of reflectivity of approx. 30 dB is achieved. Fig. 5 shows how this maximum varies, with the thickness - and too the appearance of a maximum for a 3 $\lambda/4$ resonance, as mentioned earlier. In the same way, a maximum reflectivity is achieved with a $C_v$ = 40 % and a thickness of 7,5 mm for the absorber, for a frequency of about 1 GHz.

This example, as well as examples hereunder, shows the achievement of typical frequencies, where reflexions are minimized ; obviously, they can be placed at frequencies, where this application needs a maximum of absorption, as for example placing them at chamber resonances, in a typical ALC (Absorber Lined Chambers).

This example demonstrates the design of composites, where frequency behaviour is modeled according to the concentration $C_v$ of ferro-ferrimagnetica in a composite material.

. **Example 2**

**Multilayer Absorber, for the 30-1000 MHz range**

As shown earlier, the wave-impedance of the above mentioned composites decreases, when the magnetic concentration $C_v$ increases ; whereas the propagation constant increases with $C_v$ .

Following the invention, in a multilayer design, one can optimize these variations (from one to another "λ/4 frequencies") in the following way : the layer with the lowest wave impedance and the highest index ( $= \sqrt{\varepsilon * \mu *}$ ) is placed against the conductive substrate, and further outer layer(s) use decreasing index and increasing wave-impedance.

In a first example (2.1), a two layer design uses the above composite layers, with composite concentration $C_v$ = 90,6 % (in touch with the conductive substrate) and composite concentration $C_v$ = 68,5 % (oriented towards free-space).

The overall reflectivity achieved (Fig. 6, wave D), shows a good improvement around 250 MHz, but a decrease of performance towards the upper end of the frequency range. With a third layer, as described above, with $C_v$ = 40 %, the upper end of performance is too improved. Overall, a reflectivity of better than 8 dB is achieved over the 30 MHz - 1 GHz frequency range. The exact calculation, taking in account interactions between the layers, achieves a better than 10 dB reflectivity, with an overall thickness reduced from 16,5 + 10 + 7,5 = 34 mm to 25 mm.

In a second example (2.2), I introduce additional "wave impedance steps", for the ferrite composites used : for example, another multilayer design comprises a first (on the conductive substrate) layer with the mentioned high $\mu'$, iron-excess ferrite composite (Mn-Zn ferrite, with $C_v$ = 90,6 %), a second layer with a lower $\mu'$, iron deficient Mn-Zn ferrite, (type N22 of Siemens, 3B3 and 3B5 of Philips, and B30 of LCC), with a concentration $C_v$ =90,6 %, and a third layer, with $C_v$ = 68,5 % of this last ferrite.

Each layer is calculated to represent the quarter-wavelength at the above spot-frequencies (thicknesses 16,5, 9,5 and 7 mm) : Reflectivity is better than 15 dB over the frequency range, for this non-optimized design.

The use of a Ni-Zn ferrite composite outerlayer, with much reduced wave impedance, achieves a reflectivity of better than 20 dB over the frequency range, without optimization (Example 2.3).

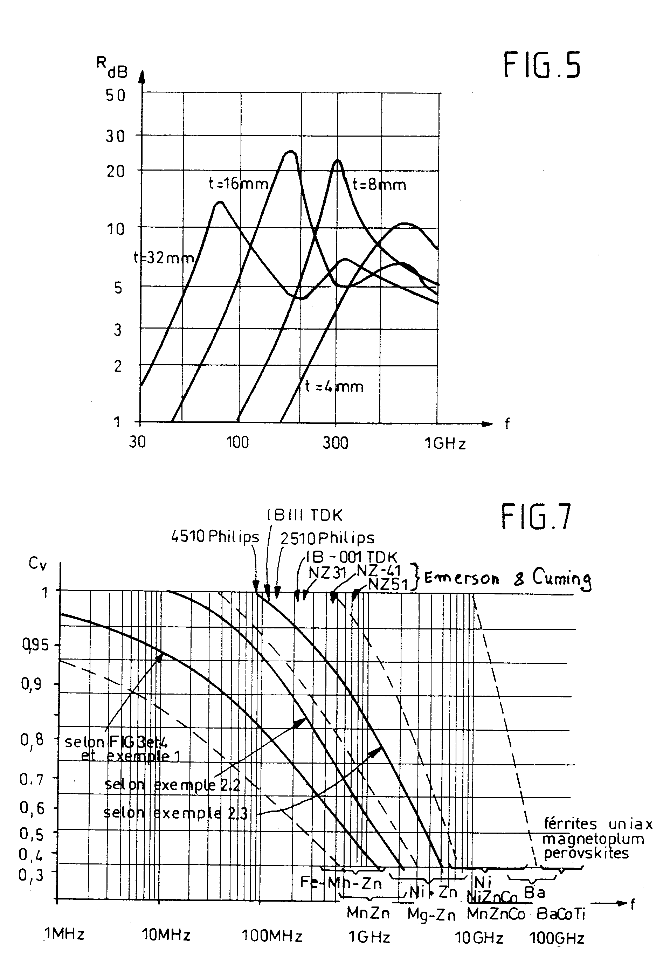

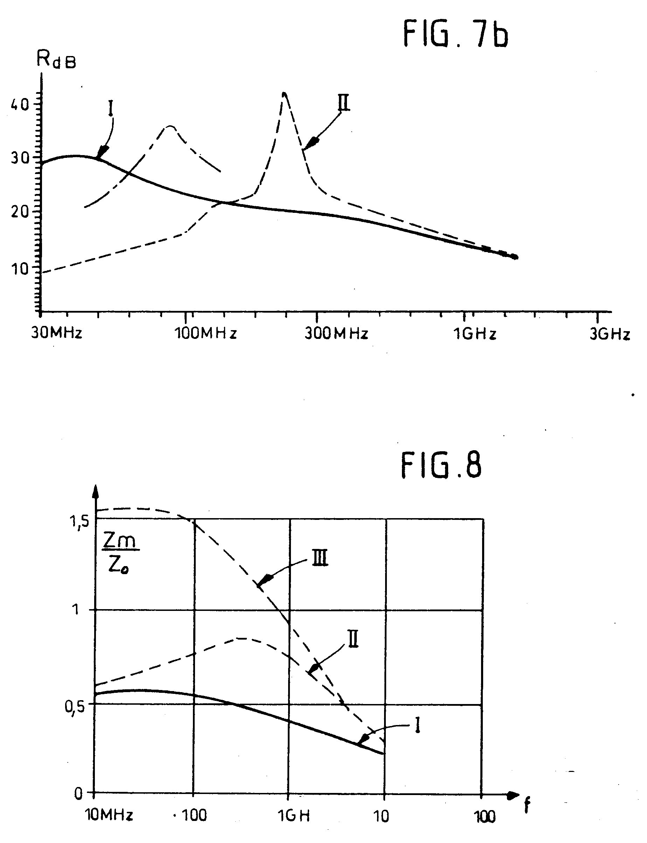

The relationship between concentration $C_v$ of one of these layers, and the type of ferrites used, is summarised in Fig.7, with reference to the example above.

It is obvious, in such multilayer designs, that the first (against conductive substrate) layer, can be using bulk ferrites, i.e. $C_v$ = 1, in the graph. It is obvious too, that instead of discrete uniform layers, the design can be progressive, i.e. conical, pyramidal, etc.. in shape : such a "diamond" shaped surface is typical for such an implementation where the spaces can eventually be filled with a non-magnetic or low magnetic compound, so as to obtain a flat surface.

**Example 3**

**Absorbers with simulated concentration variations (by macroscopic air-gaps)**

As told, I observed the equivalency of microscopic "non-magnetic" intersticial gaps in a dielectromagnetic composite, with macroscopic "non-magnetic" gaps in an absorber-covered surface.

In the implementation of example 1 above, the same Mn-Zn ferrite, with high low frequency permeability,has been used to implement three very different composites, with volume concentrations $C_v$ of 90,6, 68 and 40 % of the ferrite.

With the mentioned equivalency, where the wave sees only "average values" of permeability (and permittivity), (as long as the surface dimensions are smaller than the wavelength), one can simulate the above concentrations by introducing airgaps between panels or tiles, airgaps which vary for each layer, accordingly to these concentrations $C_v$.

The surprising effect, is that not only the low frequency $\mu'$ values decrease (with reducing $C_v$), but that $\mu'$ and $\mu''$ spectra change in the same way as shown and told above, in connection with Fig. 2, a fact which is not recognized in the current state of the art.

With these results in mind, the above multilayer example, with the same ferrite, gives following equivalent designs, using only $C_V$ = 90,6 % composite material : the first layer (thickness = 16,5 mm) will cover entirely the conductive surface (no gaps) ; the second layer (of 9,5 mm thickness), will have to have a relative airgap of approx. : 0,037, i.e. for tiles of 10 x 10 cm, an airgap of 3,7 mm has to be provided around the tiles of the second layer. In a similar way, the third layer (7 mm thickness) has to have relative airgaps of about 0,20, i.e. a spacing of about 2 cm between tiles of 10 x 10 cm size.

Such a structure, where the spacings can be filled with a non-magnetic (or low magnetic) composite, leads to many practical implementations, including a continuous upper surface.

It is obvious, that the same reasoning can be applied to bulk ferrite (instead of $C_v$ 90,6 % composite). With the Mn-Zn ferrite considered, the first inside layer has to have a relative spacing of about 0,024, to represent the $\mu *$ spectra of the 90,6 % composite. This corresponds to a spacing between 10 cm square tiles of about 2,4 mm.

This figure shows, on another hand, the fallacy to achieve specified reflectivity data, with adjoined bulk ferrite absorber tiles. The very sensivity of high $C_v$ (including the bulk ferrite) towards airgaps, can be reduced by spacing lower $C_V$ composites as interfacial layer or "glue" between such tiles. Variable spacing offers, following the invention, an interesting possibility to change reflectivity spectra, during the installation of the absorbers in ALC chambers, etc... : this feature is interesting to consider, when reflectivity v.s incidence angles has to be optimized, as for "site attenuation" in test sites.

Fig. 7bis shows the reflectivities for the bulk iron deficit Mn-Zn ferrite of example 2 (curve I), and for the simulated "composite", consisting of the same bulk ferrite, with the airgaps (curve II).

## Example 4

### Absorbers for other frequency ranges

The basic ideas of the invention, can obviously be applied to other frequency ranges, where the ferrite can always be of the high saturation type, and than be "diluted", as told, so as to place the dispersion in the desired frequency band (Graph 7).

For higher frequencies, Ni-Zn and Mg-Zn ferrites, can thus be diluted, as well as Ni-Zn-Co, Li-Zn, etc.. ferrites, for even higher frequencies. Fig. 7 indicates a typical relationship between the concentration $C_v$ (included the bulk ferrite : Co = 100 %) and the frequency range, where the necessary dispersion takes place. The graph shows that reflexion cancelling can be achieved, down to lower frequencies (i.e. 1 MHz), but that such designs need the implementation of high and precise values of concentration $C_v$, with no quarter-wave design possible with bulk Mn-Zn or Fe-Mn-Zn ferrites.

The composite approach, following the invention, with the eventual mixing of ferrite powders and ferrite-ironpowder mixtures, before the processing of the high $C_v$ composite, gives here a solution. The special processing needed, is commented hereunder.

## Example 5

### Absorbers, with wave-impedances matching

The above mentioned mixing of different kinds of ferrite powders, is obviously impossible in the classical firing process, for the manufacture of bulk ferrites, from metallic salts, or in general, from chemical precursors.

In this example, I shall show another important aspect of the invention, related to such high $C_v$ heterogenous composites, by considering typical wave impedance spectra. Graph 8 shows the wave impedance of several ferrite: composites, of volume concentration $C_v$ of 68,5 %.

Curve I shows the Mn-Zn (with excess iron) ferrite wave impedance of example 1, relative to the free-space impedance:Zm/Zo.

Curve II shows the relative impedance for the Mn-Zn (with iron deficiency), of example 1, and curve III the wave impedance for the ($Ni_{0,5}$ $Zn_{0,5}$) ferrite of example 2.3.

Only for the last composite, wave impedance matching (i.e.$\mu* = \varepsilon*$) is achieved around 700 MHz. But, mixing the right amounts of these ferrites, amounts which vary with overall $C_v$ to be achieved, Zm/Zo can be made to cross the 1 axis (i.e. Zm = Zo), in one or several points, in the 30 MHz to 1 GHz frequency range.

According to the invention, and independantly from the basic $\lambda/4$ design, reflectivity cancellations can thus be introduced, adding to or independantly from the $\lambda/4$ (and3/4 $\lambda$..) cancellations presented.

## Example 6

### Absorbers, with permittivity spectra control

In the above examples, I did not comment about the nature of the matrix material, i.e. the binder holding the magnetic granular material together : for concentrations $C_v$ up to 75 %, the means to achieve such composites has been described elsewhere (for example, my french patent N° 7.833.385). For still higher concentrations, only thermosettable or other non-flexible binders can be used. Classical techniques use polyvinyl-alcool (PVA) and polyethyleneglycol (PEC), well known for the implementation of "green" materials, in ferrite manufacturing ; these or other matrix materials then disappear more or less during the firing process, and allow the implementation of high controlled values of concentration $C_v$.

Whereas, for normal bulk ferrites, a 100 % $C_v$ is looked for, a typical caracteristic of the invention, is the achievement of lower values, including controlled pores.

Resintering of already finally sintered ferrite powders is a typical approach to achieve such high concentrations, according to the invention. Hot fusion techniques with bakelite powder, are known in the process for manufacturing molded magnetic forms. Other techniques include epoxy and other resins, polyimide varnishes, emulsions of teflon on vinydilene chloride, polyallylate powder ; furthermore, low temperature sintering can be used with ad-hoc glasses, ferroelectric powders, i.e. substances which fuse at temperature below the ferrite melting temperature. Finally, the classical technique of intergranulatory precipitation of more or less insulating metallic salts ($TiO_2$, $SiO_2$, $Fe_2O_3$, ect..), as practised in classical ferrite manufacturing can be used, with evidently an increased volume of precipitation.

The interest to achieve high permittivity, for the overall composite, has been commented, so as to achieve an increased propagation constant, i.e. lower product thickness.

The invention includes such dielectrics, and furthermore dielectrics which show a permittivity dispersion, in the considered frequency range : here, the conduction effects of the magnetic grains, the conduction of the binder material and the dielectric behaviour of both, have to be considered, with eventually ferro-electric and barrier-layer effects : such effects can combine and show conductive dispersion, Debye relaxation effects, Maxwell-Wagner interface resonance, and dipolar resonance effects : one of the interesting unexpected results is the presence of dielectric dispersion spectra, similar to those of Fig. 2, for relaxation and resonance effects, i.e. the possibility to model dielectric dispersion, as needed.

In a first example (6.1), I refer to the ferrites mentioned earlier, presenting a resistivity in the range of 1 $\Omega$.m, for the iron excess Mn-Zn ferrite, of 50 $\Omega$.m, for the iron deficient ferrite, and $10^2$ to $10^5\Omega$.m for Mg-Zn and Ni-Zn stocheometric ferrites.

The incorporation of such ferrite powders in an insulating binder material, increases the resistivity of the composite, as it will decrease the permittivity : dielectric loss angles will depend strongly on the presence or absence of percolation, i.e. of the value of $C_v$ and the presence of insulating material around each grain.

Contrary to classical knowledge, the invention considers too, very low resistivity ferrites, which will introduce a strong dielectric dispersion.

In a first example (6.1), I mention a family of high saturation magnetization ferrites, with high values of complex permeability, like Mn-Zn, Ni-Zn, Cu-Zn, ect.. ferrites, with iron excess, which by Vervey exchange, will show low resistivity. In the same way, I experienced Mn-Zn ferrites, with low or no Zn and/or Mn content, with especially a formulation of the type :

$$(Fe_{1-x}0 . Zn_x0) Fe_20_3$$

with 0<x<0,85, and the special case of $Fe_30_4$, where resistivities of $10^{-3}$ to 1 $\Omega$.m can be achieved, with very high saturation magnetization, and good permeability; with an emphasis on x = 0,06 to 0,30. In a composite, such ferrites allow high permittivity and a dielectric $\varepsilon'$ dispersion, over the 30-2000 MHz range.

With such low resistivities - the more true with carbonyl iron powders - eddy currents may appear, in thicker composite geometries. I have observed, here too, that an additional $\mu'$ dispersion and $\mu''$ absorption appear (similar to Fig. 2) , superposed and varying with concentration : These are superposed to the basic magnetic spectra due to magnetic wall relaxations and rotations.

In a second example (6.2), with a carbonyl iron powder, of granulometry equal or less than 10 $\mu$m, for $C_v$ of 68 %, permittivities of the order of 500 are achieved, with a dispersion, in the 30-1000 MHz ranges.

In a third example 6.3., I have implemented the inverse approach, i.e. a relatively insulating ferrite, is imbedded in a more or less conductive binder, for example, a binder loaded with conductive carbon black, where a very small load is necessary, when $C_v$ is high. For example, to the relative bad conductive ferrite of Fig. 2 and 3, and with $C_v$ = 68 %, I have added 3,2 % of the a very conductive carbon black (XC72) to the PVC binder. This composite is extrudable, has the magnetic caracteristics of Fig. 2 (with $C_v$ = 68 %), but the permittivity spectra are radically modified, compared to those of Fig. 3.

Indeed, after a short heating (1 h at 150° to 160° C), permittivity $\varepsilon'$ varies from 91 to 25, over the 30 MHz to 1 GHz frequency range ; resistivity varies from 1 to 0,1 $\Omega$.m approximately. Implementing, for example, the first layer of example 1, with this composite, the design shows a "quarter-wave" frequency of about 50 MHz, with a thickness of approx. 11 mm.

So, the necessary thickness of the new composite layer, has been reduced from 16,5 mm to 11 mm and the volume concentration of ferrite from 90,6 % to 68 % - with an additional broading of the low reflectivity frequency range, allowing for a reduced number of layers, in the described multilayers design.

An additional pyrolysis of the binder material, decreases further the conductivity, achieving for example 0,05 $\Omega$.m with even higher permittivity and stronger dispersion, $\varepsilon'$ vaying from 2200 to 100 over this frequency range.

Such a material is a typical representation of a "synthetic functional compound", in the sense of this invention.

In an intermediary case, a low resistivity can be implemented on the surface of the granular material, by thin-layer enduction technique, which are described for example in my french patent N° 8.613. 093.

In a forth example (6.4), I have implemented, with low or high conductivity ferrites, high values of permittivities and dispersion, using a dielectric binder with high intrinsic permittivity, such as ferroelectrics and barrier layers with ferroelectric phases, PZT, PTC material, ect.., covering grains, or introducing corresponding barrier layers, is well known in the art (see for example, my patent N° 8.613.093, already mentioned ; Y. Xu, C.J. Chen, J.D. Mackensie - SPIE Proceedings, Volume 1307, conference p. 1307-22 ; Sh. Ram, Journal of Magnetization & Magnetic Materials 80 (1989) p. 241-245 ; M. Saki Nayosake 1989, EMC-Conference Record, p. 10, A1-A8 ; G. Goodman, Advances in Ceramics, Vol. 1, p. 215 : S. Kazaoni, J. Ravez, Conference Record SEE France, octobre 1989 , p. 127 ff ; Dao Zhi Zhang, Yao Xi Zhang IEEE-MTT-S 1987, Digest p. J.43).

In such ways, I describe for example, the use of barrier layers in the system Sr Ti $O_3$ - $Bi_2O_3$ -n.Ti $O_2$, corresponding to the volume of $C_v$ desired. This dielectric is mixed as a powder (direct or as a precursor) with the ferrite grains .

The composite is subsequently sintered as low enough tempetatures, so as to avoid modifications of the ferrite. I have thus achieved a composite of high concentration $C_v$, and desired permittivity absorption and dispersion, i.e. where the absorber implemented, acts at will by dielectric loss and magnetic losses, i.e. on the electrical and magnetic field, to be absorbed : such an approach can make the absorber polarization independant.

For such ferrite powders, sintered beforehand at the final magnetization and permeability values, additional glass type matrixes are interesting to consider, as such glasses are available for lower temperature fusion (see for example, D.W. Johnson, B. B. Ghate, Record ICF4, Part 1, p. 31-32.

For the lower end of $C_v$, the high permittivity powder can be used directly, within a classical polymer or plastic as binder.

With such composites, using high permittivity, with controlled dielectric dispersion, very broadband absorber are achievable. With the last mentioned example, two or even one layer of material can solve the problem for the frequency range of 30-1000 MHz, or even 30-3000 MHz and higher.

With a medium to good conductive ferrite (like the Mn-Zn ferrite of Fig. 2 and 3, or the Ni-Zn ferrite described), such a composite has been implemented, after sintering with a Sr Ti $O_3$ binder, or Sr Ti $O_3$ with a small addition of $Bi_2$ - 2 Ti $O_2$, where the real permittivity varies approximatively from 2000 to 200, from 30 MHz to 1 GHz. The corresponding "quarter-wavelength" absorber has not only a reduced thickness, but too a very broad range reflectivity, of over 25 dB, from 30 MHz to 3 GHz and higher.

In the fifth example (6.5), such a composite has been implemented, with a high permeability Ni-Zn ferrite (with small iron excess), and about Ni 0,3 and Zn 0,7 mol composition : a selected granulometry (as per my patent France N° 7.833.385) of such a ferrite, presintered as a powder to its final density (of a density 4,8) and then ground to the indicated granulometry distribution, has been mixed with the above ferro-electric material, (or glass) and sintered in the 600 to 800 °C temperature range, in the volume ratios of 97 to 3 : a final $C_v$ = 97 %, has been obtained, with permittivity spectra, close to those of curve for $C_v$ = 97 % of Fig. 2, and a dispersion as decribed in this invention.

So, the modelization ad voluntas of ad hoc dielectromagnetics, involves different ferri/ferromagnetic materials, used alone or together, in composites - with a practical range of effective volume concentrations of about 40 to 99,5 % - so as to have, all along, the means to introduce a dielectric factor, independant of the ferrite itself.

The modelization and implementation of dielectric caracteristics, makes use of at least two different phases, where one can, so as to achieve the desired results, intervene ad volontas on the intersticial matrix, (without modifying the ferro/ferrimagnetic grains), with low temperature processes, easier to achieve and to control.

It is obvious that these new concepts are not only applicable to "quarter-wavelength" absorber structures, but to any absorptive structures, where the magneto-dielectric spectra are to be optimized, in view of achieving best absorptive performance over a broad frequency range.

Such structures include applications to electrical lines and wave-guides, shields, filters, and other electromagnetic wave structures and systems.

As a typical example in such applications, I mention the use of "composite beads" for Common-Mode suppression on wires, cables, ect.. Whereas classical bulk ferrite beads or cores need different ferrites to accomodate a given frequency range, following the invention, composites with variable high values of $C_v$, with the same ferrite, can be used, or bulk partioned ferrites (with controlled airgaps), so as to allow frequency optimization.

## Claims

1. A composite dielectromagnetic electromagnetic wave absorber material adapted to reduce electromagnetic wave reflectivity over the 30 MHz to 1 GHz and higher frequency range in which at least one ferro- or ferrimagnetic granular material is surrounded by an essentially non-magnetic matrix binding material, said granular material having an effective volume concentration of 10 to 99,9 %, said absorber showing an imaginary permeability varying as the reciprocal of the frequency over said frequency range, said absorber material being characterized by the combination of:

   - selected magnetic characteristics of said dielectromagnetic materials so that the area of magnetic dispersion, i.e. the frequency area where the real permeability decreases with increasing frequency and the loss permeability is high or a maximum, is within the considered frequency range, by the choice of volume concentration within the material and/or by external airgaps, i.e. the implementation of microscopic, essentially non-magnetic interstices and/or macroscopic essentially non-magnetic gaps; and

   - selected dielectric characteristics of said dielectromagnetic materials, combined with those of the intersticial gaps and/or dielectric binding material, so as to achieve an overall high dielectric permittivity $\varepsilon$, with optionally a certain permittivity dispersion, i.e. a frequency area where the complex permittivity shows a significant dielectric loss and a decrease with increasing frequency, within the considered frequency range.

2. A material according to claim 1, in which the permeability and permittivity spectra are achieved by the choice of the volume concentration for the magnetic material (s), as opposed to varying the chemical composition of a compact ferri/ferromagnetic.

3. A material according to any one of the preceding claims, in which the real permittivity follows the dispersion of the real permeability.

4. A material according to any one of claims 1 or 2, in which the electromagnetic absorption is substantial in the considered frequency range, by combining magnetic and dielectric absorption, where the combination of both loss tangents is greater than 0.1 and smaller than a certain limit value, so as to allow resonance to occur.

5. A material according to any one of the preceding claims, in which the composite uses combinations of different ferri/ferromagnetica, with different intrinsic wave-impedances.

6. A material according to any one of claims 1 to 5, in which the permittivity spectra are controlled by the dielectric and conductive caracteristics of the magnetic material, combined with the dielectric characteristics of the binder.

7. A material according to claim 6, in which the permittivity spectra of the composite is realized by introducing an artificial conductivity of the magnetic grains, obtained by the use of ferri/ferromagnetica with good conductivity.

8. A material according to claim 6, in which the control of the permittivity of the composite is achieved, by the introduction of a dielectric binder, with good conductivity, and optionally a dispersion.

9. A material according to claim 6, in which the control of the permittivity spectra of the composite is achieved by the introduction of a dielectric matrix material with dielectric dispersion.

10. A material according to claim 6, in which at least one part of the binder is of the thermosplastic or thermosettable type, where the composite is implemented by classical mixing and pressing techniques, and set by polymerisation, or by sintering.

11. An electromagnetic wave absorber comprising a layer of a material according to any one of the preceding claims, to absorb an incident electromagnetic wave, and where one or several wave-reflection minima are obtained, over a broad frequency range, such as "quarter-wavelength absorbers", in the case of layer is applied to a conductive surface.

12. An absorber according to claim 11, wherein the layer is discontinous, and where the discontinuities simulate spectra of compositions, with different magnetic volume concentrations, by the introductions of macroscopic gaps.

13. An absorber according to claim 11 or claim 12, in which the composite layer represents, in combination with claims 1, 2 and 3, for one or several frequencies, a complex permeability equal to complex permittivity.

14. An absorber according to any one of claims 11 to 13, in which in a given composite layer, several reflexion minima are obtained, in a given frequency range, and that such minima are staged, so as to minimize the global reflexion.

15. An absorber according to any one of claims 11 to 14, in which several composite layers, with different electromagnetic caracteristics are superposed, so as to show each a more or less independant "quarter-wave" action, in the frequency range considered, and where the succession of layers use composites with effective wave impedances increasing towards the outer side.

16. An absorber according to claim 15, in which the different characteristics of the layers are obtained by various magneto-dielectric compositions and thicknesses.

17. An absorber according to claim 15, in which the composite materials of the different layers use the same magnetic material, where the layer against the conductive wall contains the highest magnetic concentration, and the external layer, the lowest magnetic material concentration and a low permittivity.

18. An absorber according to claim 15 or claim 16, in which the composite materials of the different layers use different magnetic and/or dielectric materials, so as to increase the respective wave impedance ratios, through different material wave impedances.

19. An absorber according to any one of claims 15 to 18, in which the composite materials of each layer have their reflexions spectra, determined by the effective dielectromagnetic spectra, as determined by the lateral airgaps between segments of a given layer.

20. An absorber according to any one of claims 15 to 19, in which at least the first layer is represented by a continuous compact ferrite layer (s) so that $C_v = 100\%$, and the optional upper layers represented by dielectromagnetic composites and/or equivalent layers of bulk ferrite or composites with airgaps.

21. A use of a material according to any one of claims 1 to 10 or of an absorber according to any one of claims 11 to 20, in which the materials and their implementation, are used as coverings of conductive surfaces or part of such surfaces, to reduce radar reflexions, in camouflage / stealth applications, with a reduction of the equivalent radar crossection.

22. A use of a material according to any one of claims 1 to 10 or of an absorber according to any one of claims 11 to 20, in which the materials and their implementation, are used as coverings of conductive surfaces or part of such surfaces, to reduce wave reflections in test chambers, such as ALC's (Absorbers Lined Chambers), TEM Cells, GTEM Cells, loads for coaxial lines, loads for wave-guides, and other types of electromagnetic wave propagating structures.

23. The use according to claim 22, in which the reflexion minimum/minima are used to compensate for external resonances, as for example in metallic enclosures of ALC's.

24. A use of a material according to any one of claims 1 to 10 or of an absorber according to any one of claims 11 to 20, in which the absorber material or the absorber acts as well on the magnetic as on the electric field of the waves, to be absorbed, i.e. achieving a polarization independant absorption.

25. A use of a material according to any one of claims 1 to 10 or of an absorber according to any one of claims 11 to 20, in which the materials and their implementation, are used in other wave propagating or reflecting structures, such as wires, cables, electrical circuits, shields, filters, filters beads and, in a general, in all "broadband" electromagnetic structures, in which the composite concentration and/or airgaps are used to obtain the desired frequency spectra for the absorption.

26. A use of a material according to any one of claims 1 to 10 or of an absorber according to any one of claims 11 to 20, in which the materials and their implementation, are used in electronic and electromagnetic systems.

**Patentansprüche**

1. Ein dielektromagnetisches Absorber-Komposit-Material, für die Dämpfung elektromagnetischer Wellen, in dem 30 MHz bis 1 Ghz (und höher) Frequenzgebiet, in dem wenigstens ein ferro- oder ferrimagnetisches Granularmaterial umgeben ist von einem wenig- oder nicht-magnetischen Bindenmaterial, wo das Granularmaterial eine effektive Volumenkonzentration von 10 bis 99,9% darstellt, wo das Absorbermaterial eine imaginäre Permeabilität aufzeigt, die über das genannte Frequenzbereich sich reziprok der Frequenz ändert, und wo das Absorbermaterial gekennzeichnet ist, durch eine Kombination von :
   - ausgewählten magnetischen Eigenschaften dieses dielektromagnetischen Materials, so dass das Bereich der magnetischen Dispersion, das heisst, das Frequenzbereich wo die reelle Permeabilität abnimmt mit zunehmender Frequenz und die Verlust-Permeabilität gross oder maximal ist, in dem betroffenen Frequenzbereich, bedingt durch die Volumen-Konzentration in dem Material und/oder durch äussere Luftspalte, das heisst das Einbringen von mikrokopischen wenig oder nicht-magnetischen Spälten und/oder makrokopischen wenig-oder nicht-magnetischen Spälten, und
   - ausgewählten dielektrischen Eigenshaften dieses dielektromagnetischen Materials, verbunden mit den Eigenschaften der interstiziellen Spälte und/oder des dielektrischen Bindematerials, so dass eine globale hohe dielektrische Permittivität $\varepsilon$ erreicht wird, mit gegebenenfalls, einer gewissen dielektrischen Dispersion, das heisst einem Frequenzbereich, wo die komplexe Permittivität gewisse dielektrische Verluste und ein Abnehmen mit steigender Frequenz aufweist, in dem genannten Frequenzbereich.

2. Ein Material nach Anspruch 1, wo die Spektra der Permeabilität und Permittivität erhalten werden, durch die Auswahl der Volumen-Konzentration des/der magnetischen Materialien, im Gegensatz von verschiedenen chemischen Kompositionen eines kompakten ferriferromagnetischen Materials.

3. Ein Material, nach irgendwelchen der obigen Ansprüche, in dem die reelle Permittivität der Dis-

person der reellen Permeabilität folgt.

4. Ein Material, nach irgendwelchen der Ansprüche 1 und 2, wo die elektromagnetische Absorption substanziell ist, in dem betroffenen Frequenzbereich, durch die Verbindung von magnetischer und elektrischer Absorption, wo die Kombination von den beiden Verlustwinkeln grösser ist als 0,1 und kleiner als ein gewisser Grenzwert, so dass eine Resonanz bestehen kann.

5. Ein Material, nach irgendwelchen der obigen Ansprüche, wo das Komposit-Material eine Kombination von verschiedenen Ferri/Ferromagnetika anwendet, mit verschiedenen Wellenimpedanzen.

6. Ein Material, nach irgendwelchen der Ansprüche 1 bis 5, wo die Permittivitätspektra bedingt werden durch die dielektrischen und konduktiven Eigenschaften des magnetischen Materials, verbunden mit den dielektrischen Eigenschaften des Bindemittels.

7. Ein Material, nach Anspruch 6, wo die Permittivitätspektra des Komposites erhalten werden durch das Einbringen einer artifiziellen Leitfähigkeit der magnetischen Körner, erreicht durch die Anwendung von Ferri/Ferromagnetia mit guter Leitfähigkeit.

8. Ein Material, nach Anspruch 6, wo die Permittivität-Spektra des Komposites erhalten werden durch die Benützung eines dielektrischen Bindematerials, mit guter Leitfähigkeit, und gegebenenfalls, mit dielektrischer Dispersion.

9. Ein Material nach Anspruch 6, wo die Permittivität-Spektra des Komposits erhalten werden durch die Benützung eines dielektrischen Matrizen-Materials, mit dielektrischen Dispersion.

10. Ein Material, nach Anspruch 6, wo wenigstens ein Teil des Bindematerials von thermoplastischen oder thermoharten Typ ist, wo das Kompositmaterial durch klassischen Misch - und Press technik hergestellt wird, und verdichtet wird durch Polymerization oder Sintern.

11. Ein elektromagnetischer Wellenabsorber, dargestellt durch eine Schicht eines Materials, nach irgendwelchen der obigen Ansprüche, um einfallende elektromagnetische Wellen zu absorbieren, und wo ein oder mehrere Wellenreflexionsminima erhalten werden, über einen breiten Frequenzbereich, im Sinne einer "Viertelwellelängen-Absorbers", im Falle, wo die Schicht auf eine leitende Oberfläche aufgebracht ist.

12. Ein Absorber nach Anspruch 11, wo die Schicht aufgeteilt ist, und wo die Aufteilungen Spektra verschiedener Kompositionen simulieren, mit verschiedenen Volumenkonzentrationen, mit dem Einbringen von makroskopischen Spälten.

13. Ein Absorber nach Auspruch 11 oder 12, wo die Kompositschicht, verbunden mit Ansprüchen 1, 2 und 3, eine komplexe Permeabilität aufweist, die der komplexen Permittivität, für eine oder mehrere Frequenzen, gleich ist.

14. Ein Absorber nach irgendwelchen der Ausprüche 11 bis 13, wo, in einer gegebenen Komposit-Schicht, mehrere Reflexions-Minima erhalten werden, in einem gewissen Frequenzbereich, und dass diese Minima so verteilt sind, dass die globale Reflexion minimal wird.

15. Ein Absorber nach irgendwelchen der Ausprüche 11 bis 14, wo mehrere Kompositschichten, mit verschiedenen elektromagnetischen Eigenschaften, überlagert sind, so dass jede Schicht eine mehr oder weniger unabhängige "Viertel-Wellenlängen" Aktion aufweist, in einem gewissen Frequenzgebiet, und wo die Reihe der Überlagerung Komposite benützen, deren effektive Wellenimpedanzen nach aussen zunehmen.

16. Ein Absorber nach Anspruch 15, wo die verschiedenen Eigenschaften der Schicnten durch verschiedene magnetodielektrische Kompositionen und Schichtdicken erhalten werden.

17. Ein Absorber nach Anspruch 15, wo die Komposit-Materialien der verschiedenen Schichten dasselbe magnetische Material benützen, wo die Schicht in Nähe der metallischen Wand die höchste magnetische Konzentration aufweist, und die äussere Schicht, die niedrigste magnetische Material-Konzentration und eine niedrige Permittivität.

18. Ein Absorber, nach den Ansprüchen 15 oder 16, wo die Komposit-Materialien der verschiedenen Schichten verschiedene magnetische und/oder dielektrische Materialien benützen, um die respektive Wellen-Impedanz-Verhältnisse zu erhöhen, durch verschiedenen Material-Impedanzen.

19. Eine Absorber, nach irgendwelchen der Ansprüche 15 bis 18, wo die Komposit-Materialien von jeden Schicht, ihre eigene Reflexions-Spektra aufweisen, bestimmt durch die effektive dielektromagnetischen Spektra, wie sie bestimmt sind durch lateral Luftspälte zwischen den Segmenten einer gegebenen Schicht.

20. Ein Absorber nach irgendwelchen der Ansprüche 15 bis 19, wo wenigstens die erste Schicht repräsentiert ist durch eine kontinuierliche Schicht eines/oder mehrerer kompakten Ferrite, so dass die Volumenkonzentration Cv = 100%, und wo die optionalen oberen Schichten repräsentiert sind durch dielektromagnetische Komposite und-/oder equivalente Schichten von kompakten Ferriten oder Kompositen, mit Luftspälten.

21. Die Anwendung eines Materials, nach irgendwelchen der Ansprüche 1 bis 10, oder die Anwendung eines Absorbers, nach irgendwelchen der Ansprüche 11 bis 20, wo die Materialien und ihre Ausführung benützt werden als Abdeckung von leitenden Oberflächen, oder Teilen von solchen, um Radar-Reflexionen zu verkleinern, in Kamouflage/Furtivität-Anwendungen, mit einer Reduktion der Radar-Rückstrahlfläche.

22. Die Anwendung eines Materials, nach irgendwelchen der Ansprüche 1 bis 10, oder die Anwendung eines Absorbers, nach irgendwelchen der Ansprüche 11 bis 20, wo die Materialien und ihre Ausführung benützt werden als Abdeckung von leitenden Oberflächen, oder Teilen von solchen, um Wellen-Reflexionen zu verkleinern, in Test-Räumen (wie zum Beispiel Absorber-Hallen, TEM-Zellen, GTEM-Zellen), Abschlüsse für koaxiale Leitungen, Abschlüsse für Wellenleiter, und andere Typen von Wellenfortpflanzungs-Strukturen.

23. Die Anwendung nach Anspruch 22, wo das/die Reflexionsminimma benützt wird/werden um äussere Resonanzen to unterdrücken, wie zum Beispiel in metallischen Gehäusen (Absorber-Hallen).

24. Die Anwendung eines Materials nach irgendwelchen der Ansprüche 1 bis 10 oder die Anwendung eines Absorbers, nach irgendwelchen der Ansprüche 11 bis 20, wo das Absorbermaterial oder der Absorber auf sowohl das magnetische Feld wie auf das elektrische Feld der zu absorbierenden Wellen einwirkt, das heisst das man eine Polarisation-unabhängige Absorption erhält.

25. Die Anwendung eines Materials nach irgendwelchen der Ansprüche 1 bis 10, oder die Anwendung eines Absorbers, nach irgendwelchen der Ansprüche 11 bis 20, wo die Materialien und ihre Anwendung benützt werden in andern Strukturen mit Wellenfortpflanzung oder Wellen-reflexion, wie Drähte, Kabel, elektrische Kreise, Abschirmungen, Filter, Filter-kerne, und, in allgemeinen, in allen "Breitband" elektromagnetischen Strukturen, wo die Konzentration der Komposite und/oder die Luftspälte benützt werden um die gewünschte Absorptions-Frequenz-Spektra zu erreichen.

26. Die Anwendung eines Materials nach irgendwelchen der Ausprüche 1 bis 10 oder die Anwendung eines Absorbers nach irgendwelchen der Ansprüche 11 bis 20, wo die Materialien und ihre Anwendung, in elektronischen und elektromagnetischen Systemen benützt werden.

**Revendications**

1. Matériau composite diélectromagnétique haute-fréquence, pour absorber les ondes électromagnétiques, et plus particulièrement pour réduire leur réflexion dans la gamme de fréquences de 30 MHz à 1 GHz et au-delà, où au moins un matériau ferro- ou ferrimagnétique granulaire, est entouré par un matériau matrice, essentiellement non magnétique, avec une concentration de 10 à 99,9 % en volume, dans lequel ce matériau granulaire a une perméabilité imaginaire variant inversement proportionnellement à la fréquence, dans cette gamme de fréquences, ce matériau absorbant étant caractérisé par une combinaison de :
   - Caractéristiques magnétiques des matériaux diélectromagnétiques sélectionnées, afin de placer la région de dispersion magnétique, c'est à dire, le domaine de fréquences où la perméabilité réelle décroit quand la fréquence augmente, et où la perméabilité de pertes est élevée ou maximum, à l'intérieur du domaine de fréquences considéré, par le choix de cette concentration volumique dans le matériau et/ou par le choix d'entrefers extérieurs, c'est à dire l'implémentation d'interstices microscopiques essentiellement non magnétiques, et/ou d'interstices macroscopiques essentiellement non magnétiques, et
   - Caractéristiques diélectriques des matériaux diélectromagnétiques sélectionnées,combinées avec celles des interstices et/ou du matériau matrice diélectrique, afin de réaliser une permittivité globale ε élevée, avec optionnellement une certaine dispersion de permittivité, c'est à dire, un domaine de fréquences où la permittivité complexe montre des pertes diélectriques significatives, ainsi qu'une valeur croissante quand la fréquence augmente, dans le domaine de fréquence considéré.

2. Matériau selon la revendication 1, dans lequel les spectres de perméabilité et de permittivité sont obtenus par le choix de la concentration volumique du ou des matériaux magnétiques, en opposition avec une composition chimique différente d'un ferri/ferromagnétique compact.

3. Matériau selon l'une quelconque des revendications précédentes, dans lequel la permittivité réelle suit la dispersion de la perméabilité réelle.

4. Matériau selon une des revendications de 1 ou 2, dans lequel l'absorption électromagnétique est substantielle dans la gamme de fréquences considérée, par le combinaison de l'absorption magnétique et diélectrique, où la combinaison des deux tangentes de pertes est supérieure à 0,1 et inférieure à une certaine valeur limite, permettant l'obtention d'une résonnance.

5. Matériau selon une des revendications précédentes, dans lequel le composite utilise des combinaisons de différents ferri/ferromagnétiques, avec des impédances d'onde différentes.

6. Matériau selon une des revendications 1 à 5, dans lequel le spectre de permittivité est contrôlé par les caractéristiques diélectriques et conductives du matériau magnétique, combinées avec les caractéristiques diélectriques du liant.

7. Matériau selon la revendication 6, dans lequel le spectre de permittivité du composite est réalisé par l'introduction d'une conductivité artificielle des grains magnétiques, obtenue par l'utilisation de ferri/ferromagnétiques à bonne conductivité.

8. Matériau selon la revendication 6, dans lequel le contrôle du spectre de permittivité du composite est réalisé par l'introduction d'un liant diélectrique à bonne conductivité, avec, optionnellement, une dispersion.

9. Matériau selon la revendication 6, dans lequel le contrôle du spectre de permittivité du composite est réalisé par l'introduction d'un liant diélectrique à permittivité avec une dispersion diélectrique.

10. Matériau selon la revendication 6, dans lequel au moins une part du liant est du type thermoplastique ou du type thermodurcissable, mis en place par des techniques de mélanges et de pressages classiques, et fixé ensuite par polymérisation, ou par frittage.

11. Absorbant d'ondes électromagnétiques, comportant une couche de matériau selon une des revendications précédentes, utilisé pour absorber une onde électromagnétique incidente, et où un ou plusieurs minima de réflectivité sont obtenus, dans une large gamme de fréquences, tel que par exemple, des "absorbants quart d'onde", dans le cas de l'application de la couche contre une surface métallique.

12. Absorbant selon la revendication 11, dans lequel la couche de matériau est discontinue, et où les discontinuités simulent les spectres de compositions à concentrations variables, par l'introduction d'entrefers macroscopiques.

13. Absorbant selon les revendications 11 et 12, dans lequel la couche de matériau composite représente, en combinaison avec les revendications 1, 2 et 3, pour une ou plusieurs fréquences, une perméabilité complexe égale à sa permittivité complexe.

14. Absorbant selon une des revendications 11 à 13, dans lequel, dans une couche de matériau composite donné, plusieurs minima de réflectivité sont obtenus dans une gamme de fréquences considérée, et que ces minima sont étagés de sorte à minimiser la réflectivité globale.

15. Absorbant selon une des revendications 11 à 14, dans lequel plusieurs couches de matériau composite à caractéristiques électromagnétiques différentes sont superposées, de sorte à présenter chacune une action "quart d'onde" propre, plus ou moins indépendante, et dans laquelle la successsion des couches utilisent des composites avec des impédances d'onde croissantes vers l'extérieur.

16. Absorbant selon la revendication 15, dans lequel les caractéristiques différentes des couches sont obtenues par des compositions magnétiques et diélectriques, et par des épaisseurs différentes variées.

17. Absorbant selon la revendication 15, dans lequel les matériaux composites des différentes couches utilisent le même matériau magnétique, et où la couche contre le métal comporte la charge la plus élevée, et la couche externe de la couche magnétique la plus faible, avec un liant à permittivité réduite.

18. Absorbant selon les revendications 15 ou 16, dans lequel les matériaux composites des différentes couches utilisent des matériaux magnétiques et/ou diélectriques différents, afin de rendre maximum les rapports de leurs impédances d'onde respectives, avec l'utilisation de matériaux à impédances d'onde différentes.

19. Absorbant selon les revendications 15 à 18, dans lequel les matériaux composites de chaque couche ont leurs spectres de réflexion déterminés par des spectres diélectromagnétiques effectifs, tels que déterminés par des entrefers latéraux entre segments d'une couche donnée.

20. Absorbant selon les revendications 15 à 19, dans lequel au moins la première couche est représentée par un ferrite compact (Cv = 100%) et/ou dans lequel les couches supérieures optionnelles sont représentées par des composites diélectromagnétiques et/ou des couches équivalentes de ferrite compact ou de composites, avec des entrefers.

21. Utilisation d'un matériau selon les revendications de 1 à 10, ou d'un absorbant selon les revendications 11 à 20, dans lequel les matériaux et leur implémentation comme recouvrements des surfaces ou part de surfaces conductrices, sont utilisés pour réduire les réflexions radar, dans les applications à camouflages/furtivité, et réduction de la surface équivalente radar.

22. Utilisation d'un matériau selon les revendications précédentes 1 à 10 ou d'un absorbant selon les revendications 11 à 20, dans lequel les matériaux et leur implémentation comme recouvrements des surfaces ou part de surfaces conductrices, sont utilisés pour réduire les réflexions d'ondes dans des installations de mesures "anéchoiques", telles que chambres anéchoiques, cellules TEM, GTEM, charges pour coaxiaux et guides d'ondes, et autres types de structures électromagnétiques à propagation.

23. Utilisation, selon la revendication 22, dans laquelle le minimum ou les minima de réflexion servent à compenser des résonnances externes, telles que par exemple, à l'intérieur d'enceintes métalliques de chambres.

24. Utilisation d'un matériau selon les revendications 1 à 10, ou d'un absorbant selon les revenducations 11 à 20, dans lequel le matériau ou l'absorbant agissent à la fois sur le champ magnétique et le champ électrique des ondes à absorber, c'est à dire, permettant l'obtention d'une absorption indépendante de la polarisation.

25. Utilisation d'un matériau selon les revendications 1 à 10, ou d'un absorbant selon les revendications 11 à 20, dans lequel les matériaux et leur implémentation sont utilisés pour toutes autres structures à propagation ou réflexion d'ondes électromagnétiques, telles que fils, câbles, circuits, blindages, filtres, boitiers de filtres, etc, et d'une façon générale, toutes applications à "résonnance large bande", dans lesquelles la concentration du composite et/ou les entrefers sont utilisés pour obtenir les spectres d'absorption désirés.

26. Utilisation d'un matériau selon les revendications 1 à 10, ou d'un absorbant selon les revendications 11 à 20, dans lequel les matériaux et leur implémentation sont utilisés dans des systèmes électroniques et électromagnétiques.

FIG.1

FIG.2

FIG.3

FIG.4

Composites Ferrite selon FIG.2 et 3

(A) $C_v = 90,6\%$ t.16,5 mm $f_{\lambda/4} \equiv 41$ MHz
(B) $C_v = 68,5\%$ t=10 mm $f_{\lambda/4} \equiv 250$ MHz
(C) $C_v = 40\%$ t=7,5 mm $f_{\lambda/4} \equiv 1$ GHz

$$R_{dB} = 20 \, Log_{10} \frac{1}{R}$$

FIG.6

(D) = (A) + (B) selon FIG.4
(E) = (A) + (B) + (C) selon FIG.4

FIG.5

FIG.7

FIG. 7b

FIG.8